# EUROPÄISCHE PATENTSCHRIFT

(11) **EP 1 909 683 B1**
(45) Veröffentlichungstag und Bekanntmachung des Hinweises auf die Patenterteilung: **13.01.2010**
(21) Anmeldenummer: 06762443.7
(22) Anmeldetag: 06.07.2006
(51) Int. Cl.: A61C 7/08

(54) **LINGUALRETAINER**
LINGUAL RETAINER
DISPOSITIF DE RETENTION LINGUALE

(30) Priorität: 04.08.2005 DE 102005036678
(43) Veröffentlichungstag der Anmeldung: 16.04.2008
(73) Patentinhaber: Sevinc, Habib, 2587 WJ Den Haag (NL)
(72) Erfinder: Sevinc, Habib, 2587 WJ Den Haag (NL)
(74) Vertreter: Nau, Walter
(86) Internationale Anmeldenummer: PCT/EP2006/006586
(87) Internationale Veröffentlichungsnummer: WO 2007/014616

(56) Entgegenhaltungen:
- GB-A- 2 086 730
- US-A- 3 348 311
- US-A- 4 413 978
- US-A- 4 516 938
- US-A- 4 659 310
- US-A- 4 869 666
- US-A- 5 536 169
- US-A1- 2002 086 266
- US-B1- 6 371 759

## Beschreibung

Die Erfindung bezieht sich auf eine Rückhalteeinheit (Lingualretainer) zur kieferorthopädischen Behandlung von Zähnen, insbesondere Schneidezähnen, des Unter- und/oder Oberkiefers, insbesondere zur Vermeidung eines Rückfalls oder der Entstehung eines tertiären Frontengstandes, mit einem Spannelement, das einzeln mit den Zähnen verklebbar ist und in Anspruch 1 definiert ist.

Derartige Lingualretainer sind bekannt und im Internet unter "Lingualretainer" - http://www.smileclub.de/retainer.htm beschrieben.

Bei diesem Lingualretainer besteht das Spannelement aus einem runden, mehrfach verseilten Spanndraht, der einen Durchmesser von ca. 0,5 mm hat. Dieser Stahldraht wird einzeln mit den Innenflächen der Zähne, vorzugsweise der Schneidezähne und der Eckzähne verklebt.

Dabei besteht das Problem, dass der Stahldraht nicht zu weit außen in Richtung Schneiden an den Zähnen angeklebt werden darf, damit er nicht mit Schneiden der Gegenzähne des Ober- oder Unterkiefers in Kontakt tritt, beim Kauen stört oder abgetrennt wird. Andererseits darf er nicht zu weit nach innen geführt sein, damit er nicht das Zahnfleisch der Zähne beschädigt. Dies ist insbesondere deshalb ein Problem, weil das Zahnfleisch zwischen den beiden mittleren Schneidezähnen weiter in Richtung der Schneiden der Zähne vorsteht als bei den übrigen Zähnen. Darüber hinaus ist die Handhabung des Stahldrahtes schwierig, da er nicht formstabil ist.

Da der Retainer und damit auch der Stahldraht mehrere Jahre, in der Regel vier bis fünf Jahre, ggf. auch noch länger an den Zähnen befestigt bleiben soll, besteht das Problem, dass der Stahldraht auch korrodiert.

Dadurch und durch die Anlenkung des Spannelements besteht das Problem, dass der Stahldraht zwischen Zähnen durchreißt und die Wirkung des Retainers verloren geht oder beeinträchtigt wird.

Die GB- 2 086 730 A beschreibt eine Stützeinheit für Zähne, die bandförmig ausgeführt, um eine Gruppe von Zähnen herum geformt ist und die Zähne außen vollständig und innen teilweise umschließt. Der Freiraum zwischen der Stützeinheit und den Zähnen wird vollständig mittels eines Kunststoffes ausgefüllt, so dass die Zähne eine vollständige Abstützung erfahren, da die Stützeinheit das Herausbrechen bzw. Verlieren von Zähnen verhindern soll. Die Stützeinheit ist vorzugsweise aus Metall, kann aber auch aus Kunststoff hergestellt sein.

Aufgabe der vorliegenden Erfindung ist es, diese Nachteile zu beheben und eine Rückhalteinheit, Lingualretainer, zur Verfügung zu stellen, die die zuvor beschriebenen Nachteile behebt und eine gute Anpassung an die Zähne und eine gute Befestigung an den Zähnen erlaubt und eine hohe Stabilität zwischen den Zähnen sicherstellt.

Die Aufgabe der Erfindung wird dadurch gelöst, dass das Spannelement als Formstück ausgebildet und aus mundverträglichem Kunststoff hergestellt ist.

Dadurch entfallen die Probleme der Korrosion, wobei auch durch die Ausbildung des Spannelements als Formteil eine gute Anpassung an die Zähne bzw. die Zahninnenflächen erfolgt. Die Festigkeit des Kunststoffes kann dabei den Gegebenheiten angepasst werden.

In der Erfindung wird vorgeschlagen, dass das Formstück bandförmig ausgeführt und dem Verlauf der Zähne angepasst ist.

Das Formstück ist entsprechend der Zahninnenflächen der Zähne, mit denen es verklebt wird, geformt, insbesondere verdreht oder gewunden. Dadurch hat das Formstück bereits vor dem Verkleben mit den Zähnen die der Innenflächen der in Frage kommenden Zähne angepasste Form, so dass ggf. nur die Enden des Formstückes entsprechend der Kiefergröße gekürzt zu werden brauchen, da das mittlere Stück des Formstückes den Zähnen angepasst ist.

In der Erfindung wird vorgeschlagen, dass das Formstück in dem Übergangsbereich zwischen den mittleren Schneidezähnen ein Bogenstück aufweist. Das Bogenstück ist dabei in Richtung der Schneiden der Schneidezähne und/oder in Richtung der Schneidezähne nach außen geformt und zwar so, dass es den Innenflächen der mittleren Schneidezähne angepasst ist und darüber hinaus dem Umstand Rechnung trägt, dass das Zahnfleisch zwischen diesen beiden Zähnen weiter nach außen vorsteht.

Das Bogenstück ist ebenfalls bandförmig ausgeführt und mittels Knickübergängen einstückig mit dem Formstück ausgebildet. Dadurch bildet das Bodenstück eine zentrale Fixierung des Formstückes zwischen den mittleren Schneidezähnen, so dass die Lage des Formstückes innerhalb der Zähne eindeutig definiert ist.

Zur weiteren Erläuterung der Erfindung wird auf die Zeichnungen verwiesen, in denen ein Ausführungsbeispiel der Erfindung vereinfacht dargestellt ist.

### Es zeigen:

- Figur 1:: eine perspektivische Darstellung eines Kiefers mit einer Zahnreihe und einem Formstück vor seiner Befestigung an den Zähnen,
- Figur 2:: eine Seitenansicht eines Kiefermodells mit Zähnen und einem separaten Formstück und
- Figur 3:: eine schräge Draufsicht auf die Zahninnenflächen mit verklebtem Formstück.

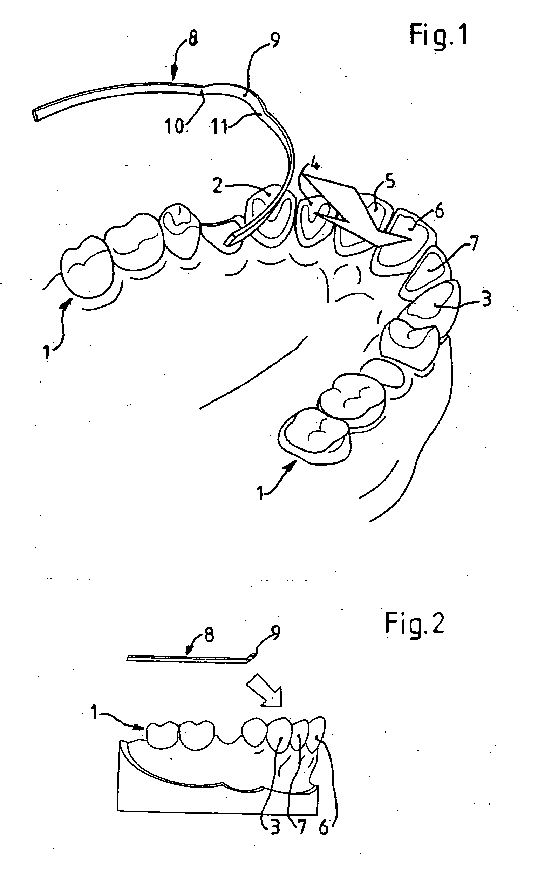

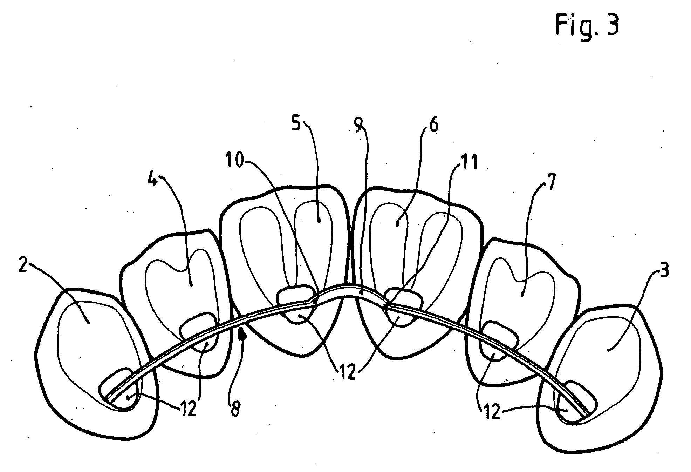

In den Figuren 1 bis 3 ist, soweit im Einzelnen dargestellt, mit 1 eine Zahnreihe bezeichnet, die Eckzähne 2 und 3 sowie Schneidezähne 4 bis 7 aufweist.

Mit 8 ist ein Formstück bezeichnet, das zum Befestigen an den Zähnen, insbesondere den Eckzähnen 2 und 3 sowie den Schneidezähnen 4 bis 7 vorgesehen ist. Das Formstück 8 ist bandförmig ausgebildet und weist in der Mitte ein Bogenstück 9 auf, das mittels Knickübergängen 10 und 11 mit den übrigen Teilen des Formstückes 8 einstückig hergestellt ist. Das Formstück 8 einschließlich Bogenstück 9 ist so geformt, dass es den Zahninnenflächen der entsprechenden Zähne, insbesondere der Eckzähne 2 und 3 sowie der Schneidezähne 4 bis 7 angepasst ist. Es kann daher ohne weitere Manipulationen und schwierige Handhabung an den Innenflächen der Zähne angelegt und mittels Klebepunkten 12 an den Zähnen befestigt werden.

### Bezugszahlenliste

- 1: Zahnreihe
- 2: Eckzahn
- 3: Eckzahn
- 4: Schneidezahn
- 5: Schneidezahn
- 6: Schneidezahn
- 7: Schneidezahn
- 8: Formstück
- 9: Bogenstück
- 10: Knickübergang
- 11: Knickübergang
- 12: Klebepunkte

## Patentansprüche

1. Rückhalteeinheit zur kieferorthopädischen Behandlung von Zähnen, insbesondere Schneidezähnen (4 bis 7), des Unter- und/oder Oberkiefers zur Vermeidung eines Rückfalls oder der Entstehung eines tertiären Frontengstandes, mit einem Spannelement, das als Formstück (8) ausgebildet und aus mundverträglichem Kunststoff hergestellt ist, wobei das Formstück (8) bandförmig ausgeführt, dem Verlauf der Zähne (2 bis 7) angepasst und mit den Zähnen (2 bis 7) verbindbar ist, wobei
das Formstück (8) entsprechend den Zahninnenflächen der Zähne (2 bis 7) geformt, insbesondere verdreht und gewunden, und mit den Zahninnenflächen der Zähne (2 bis 7) verklebbar ist, wobei
das Formstück (8) in dem Übergangsbereich zwischen den mittleren Schneidezähnen (5 und 6) ein Bogenstück (9) aufweist, dass das Bogenstück (9) in Richtung der Schneiden der Zähne (5, 6) und/oder in Richtung der Zähne (5, 6) nach außen geformt ist, wobei
das Bogenstück (9) bandförmig ausgeführt und mittels Knickübergängen (10, 11) einstückig mit dem Formstück (8) ausgebildet ist und wobei
das Bogenstück (9) eine zentrale Fixierung des Formstücks (8) zwischen den mittleren Schneidezähnen (5,6) ermöglicht.

## Claims

1. Retention unit for orthodontic treatment of teeth, in particular incisors (4 to 7), of the lower jaw and/or upper jaw, to avoid retroclination or the development of tertiary front crowding, with a brace element which is configured as a moulding (8) and is made from a plastic comptible with the mouth, wherein the moulding (8) is strip-shaped, is adapted to the profile of the teeth (2 to 7) and can be connected to the teeth (2 to 7), wherein the moulding (8) is shaped, in particular twisted and wound, according to the inner surfaces of the teeth (2 to 7) and can be adhesively bonded to the inner surfaces of the teeth (2 to 7), wherein the moulding (8) has a bow (9) in the transition area between the central incisors (5 and 6), wherein the bow (9) is shaped outwards in the direction of the cutting edges of the teeth (5, 6) and/or in the direction of the teeth (5, 6), wherein the bow (9) is strip-shaped and is configured in one piece with the moulding (8) by means of flexed transitions (10, 11), and wherein the bow (9) permits central fixing of the moulding (8) between the central incisors (5, 6).

## Revendications

1. Unité de retenue pour le traitement orthopédique des dents d'une mâchoire, en particulier des incisives (4 à 7) de la mâchoire supérieure et/ou de la mâchoire inférieure, servant à prévenir le retour ou l'apparition d'un rétrécissement frontal tertiaire et dotée d'un élément de serrage configuré comme pièce moulée (8) et réalisé en une matière synthétique compatible avec la bouche,
la pièce moulée (8) étant réalisée sous la forme d'un ruban, étant adaptée à la position des dents (2 à 7) et pouvant être reliée aux dents (2 à 7),
la pièce moulée (8) étant façonnée en correspondance à la surface intérieure des dents (2 à 7), en particulier par torsion et enroulement, et pouvant être collée sur la surface intérieure des dents (2 à 7),
la pièce moulée (8) présentant une pièce incurvée (9) placée dans la zone de transition entre les incisives centrales (5) et (6),
la pièce incurvée (9) étant façonnée vers l'extérieur dans la direction de l'arête coupante des dents (5, 6) et/ou dans la direction des dents (5, 6),
la pièce incurvée (9) étant réalisée en forme de ruban et étant réalisée d'un seul tenant avec la pièce moulée (8) au moyen de transitions coudées (10, 11),
la pièce incurvée (9) permettant de fixer de la pièce moulée (8) centralement entre les incisives centrales (5, 6).
